Europäisches Patentamt

European Patent Office

Office européen des brevets

(11) Publication number: **0 184 283 B1**

## EUROPEAN PATENT SPECIFICATION

(45) Date of publication of patent specification: **04.12.91**  (51) Int. Cl.⁵: **G01N 30/30, F27B 17/02, G05D 23/13**

(21) Application number: **85305195.1**

(22) Date of filing: **22.07.85**

(54) **Apparatus and method for controlling the temperature within a chromatograph oven.**

| | |
|---|---|
| (30) Priority: **03.12.84 GB 8430484** | (73) Proprietor: **THE PERKIN-ELMER CORPORATION**<br>**761 Main Avenue**<br>**Norwalk Connecticut 06859-0074(US)** |
| (43) Date of publication of application:<br>**11.06.86 Bulletin 86/24** | |
| (45) Publication of the grant of the patent:<br>**04.12.91 Bulletin 91/49** | (72) Inventor: **Hurrell, Ronald A.**<br>**291 Marlow Bottom**<br>**Marlow Buckinghamshire SL7 3QF(GB)** |
| (84) Designated Contracting States:<br>**CH DE FR GB LI NL** | |
| (56) References cited:<br>**EP-A- 0 086 421**<br>**DD-B- 211 855**<br>**DE-A- 3 329 855**<br>**FR-A- 2 168 334**<br>**US-A- 2 737 879**<br><br>**PATENT ABSTRACTS OF JAPAN, vol. 6, no 232 (M-172)[1110], 12th January 1983; & JP - A - 57 131 939** | (74) Representative: **Skone James, Robert Edmund et al**<br>**GILL JENNINGS & EVERY 53-64 Chancery Lane**<br>**London WC2A 1HN(GB)** |

Rank Xerox (UK) Business Services

**Description**

This invention relates to the control of temperature in a thermal system, more specifically to the programmed temperature control of the oven of a gas chromatographic system.

It is conventional in gas chromatography to position the chromatographic column within an oven which is then programmed through a preselected temperature cycle to assist in the elution of components from a sample. The ovens of such systems commonly include fans which function to maintain even heat distribution and expedite cooling during portions of the temperature cycle.

In a conventional chromatographic oven, the fan speed remains essentially constant. However, the oven enclosure includes inlet and outlet vents which are adjusted mechanically, such as by means of solenoid actuators, stepping motors, or other separately energised mechanical devices. An example of one such arrangement is disclosed in US-A-4,111,643.

If the need for such controls could be avoided, a lower cost system would be feasible.

A particular disadvantage of prior art controls is that the full range of air circulation volume is controlled by the size of the inlet and outlet air openings. This is because the fixed speed of the fan establishes an upper limit on the volumetric air flow rate. Therefore, increasing the area of the openings does not necessarily result in a proportional increase in air flow.

FR-A-2168334 discloses an air conditioning apparatus in which a fan is provided in communication with a vent through which air is drawn whenever the fan is operated.

DD-A-211855 also discloses an air conditioning system in which a variable speed fan is described.

EP-A-0086421 describes a conventional chromatograph of the type mentioned above.

In accordance with one aspect of the present invention, a chromatograph oven having heating means, an air circulating fan and vents in the oven wall positioned to permit air flow between the ambient atmosphere and the oven interior to achieve a desired temperature within the oven is characterised in that the vents constitute the sole means by which air can communicate between the ambient atmosphere and the oven interior; and in that the vents comprise a first vent in the oven wall positioned to admit ambient air into a region of relatively low pressure within the oven, means for maintaining the first vent closed but openable under the influence of pressure imbalance between the ambient air and the oven interior produced by changes in the fan speed, a second vent in the oven wall positioned to discharge air from a region of relatively high pressure within the oven, and means for maintaining the second vent closed but openable under the influence of pressure imbalance between the ambient air and the oven interior produced by changes in the fan speed.

In accordance with a second aspect of the present invention, a method of controlling the temperature within a chromatograph oven having heating means and an air circulating fan having means for adjusting the speed of the fan characterised by controlling the volumetric air flow between the oven interior and the ambient atmosphere solely by the operation of vents responsive to pressure imbalances produced by the fan, directing the in coming ambient air to a position of relatively low pressure within the oven and discharging air, from a region of relatively high pressure within the oven, into the ambient atmosphere.

An example of apparatus in accordance with the invention will now be described, with reference to the accompanying drawings, in which:-

Figure 1 is a perspective view of the oven portion of a gas chromatograph incorporating the apparatus;

Figure 2 is a plan view of the oven of Figure 1, partially broken away to illustrate its internal construction;

Figure 3 is an elevational view of the oven of Figures 1 and 2;

Figure 4 is an enlarged cross section taken substantially along the line 4 - 4 of Figure 2;

Figure 5 is an enlarged partial cross section taken substantially along the line 5 - 5 of Figure 2; and

Figure 6 is a schematic diagram of a control system usable with the apparatus.

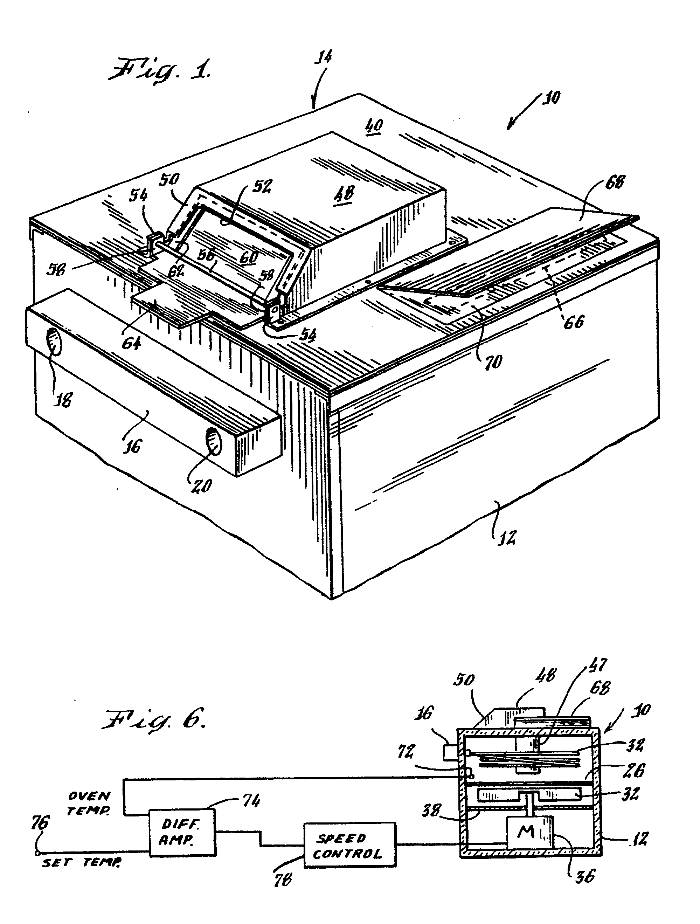

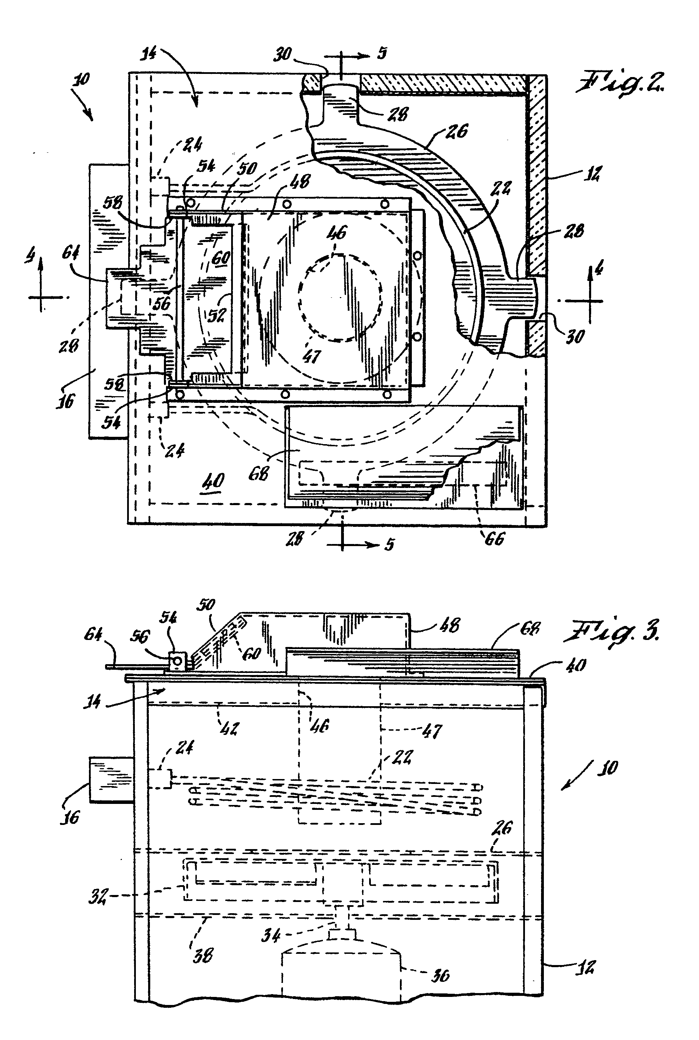

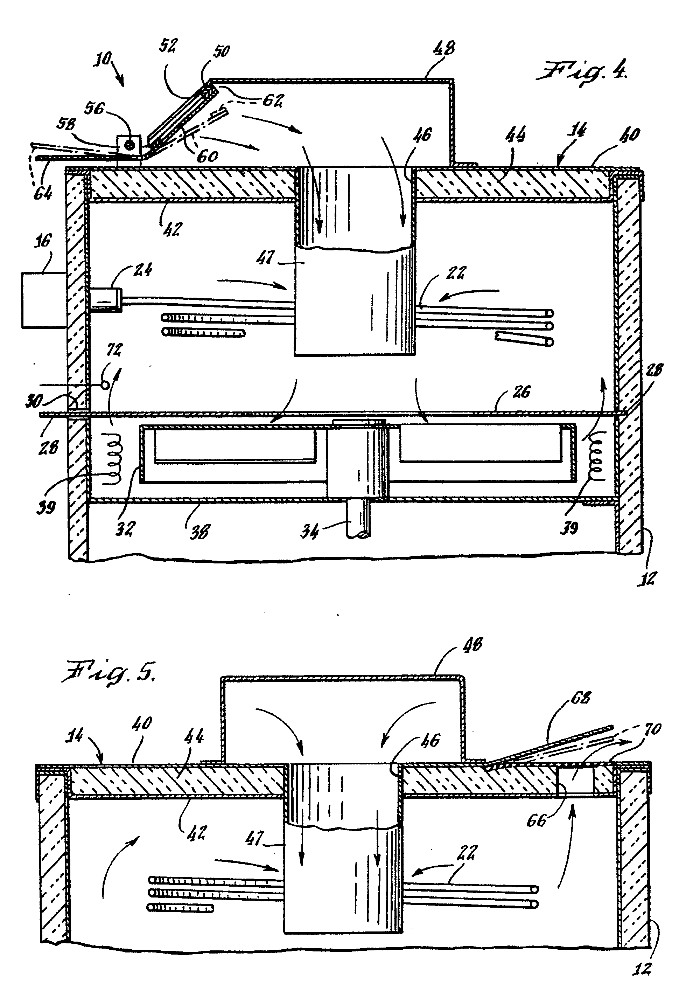

Figures 1 to 5 show a gas chromatograph oven 10 in the form of a rectangular housing 12 having insulated side walls and a top closed by a flat, square, heat insulated, removable lid 14. Mounted externally along the front wall of oven 10 is a rectangular column support block 16. At one end of the column support block 16 is an injector opening 18 and at the other end is a detector opening 20. Internally of the oven, the ends of a chromatographic column 22 are connected to these openings via couplings 24 in a conventional manner. The injector and detector carried by the support block 16 form no part of this invention and, accordingly, are neither shown nor described. Mounted below the column 22 is an annular fan guard plate 26 which is positioned by means of radial tongues 28 extending into co-operating slots 30 in the oven side walls. Directly below the fan guard plate 26 is a fan impeller 32 of the central intake, radial discharge type. A shaft 34 from a variable speed motor 36 extends upwardly through a horizontal wall 38 and is connected to drive the impeller 32. A conventional resistance heater 39 is positioned near the discharge region of impeller 32 (Figure 4).

An important feature of the apparatus of this invention resides in the construction of the oven lid 14. As will be clear from Figure 4, it is, in form, a sandwich of external and internal sheet metal layers 40, 42 respectively enclosing an insulating material 44 and shaped along its edges to fit snugly but removably within the side walls of the oven housing 12. The lid 14 defines a central circular air inlet opening 46 which forms the entrance to a vertical duct 47. Duct 47 extends through the centre of column 22 so that its open lower end is below the column. The opening 46 is enclosed by a housing 48 of generally rectangular cross section but with a sloping front wall 50 defining a rectangular opening 52. Extending upwardly from the bottom of the housing 48, at either side of the opening 52, is a pair of pivot support tabs 54 between which extends a pivot rod 56.

Depending from the pivot rod 56 by a pair of spaced pivot tabs 58 is an air inlet door 60 which includes an upwardly angled portion carrying a peripheral rubber-like gasket 62 positioned to close the opening 52, as shown in Figure 4, and a generally horizontally extending counter-weight portion 64. In the absence of moving forces, the door 60 assumes a closed position as illustrated by the solid lines of Figure 4, but is pivotal to an open position, as indicated by the dash-dotted lines.

Referring now to Figure 5, it will be noted that the lid 14 also defines a rectangular air outlet opening 66 adjacent the external periphery of the oven. A rectangular portion of the outer sheet metal layer 40 is cut out and bent upward to form a deflector plate 68 over-lying opening 66. Opening 66 is closed by a rectangular rubber-like flap 70 which normally lies flat against the top of the opening 66 but is movable upwardly under the influence of air flow to a position as illustrated by the dash-dotted lines of Figure 5.

Figure 6 illustrates schematically and in generalised form the control electronics for the apparatus of the invention. Positioned within the oven 10 is a heat sensor, such as a thermocouple 72. The output of thermocouple 72 is applied to one input of a differential amplifier 74. The other output of amplifier 74 is a set-point temperature input 76 which may come from a master controller. The output of the differential amplifier 74 actuates speed control circuitry 78 which, in turn, varies the speed of motor 36 as will be later described. As previously explained, this invention differs in principle from the prior art by completely eliminating the need for relatively complex vent control mechanisms. Instead, the oven air circulating fan functions to initiate desired changes in air flow through self-actuated air inlet and outlet openings.

In operation a typical temperature program for a gas chromatograph might require, for example, that the temperature be held at $40^\circ$C for five minutes and then climb to $250^\circ$C at a rate of $10^\circ$C per minute. the programmed temperature rise is achieved conventionally by control of the oven heater. During this time, the fan impeller 32 may be rotated at a relatively slow speed to circulate air within the oven and evenly distribute heat without actuating the vents.

After the maximum temperature has been reached, it is necessary to cool the oven back to the initial temperature, rapidly and precisely, to prepare the instrument for another anlysis. In accordance with the operating principle of the invention, this is achieved by increasing the speed of the motor 36. As the speed of the motor increases, the suction created at the centre of the impeller 32 increases, as does the external pressure around the periphery of the fan, and thus the oven. This increased suction causes the air inlet door 60 to swing open, permitting an inflow of cool room air as shown by the arrows in Figure 4. Simultaneously, the increased pressure around the periphery of the oven forces open the rubber flap 70 of air outlet opening 66. It will be noted that the air outlet opening 66 will open only enough to accommodate the excess inlet air. In other words, the air inlet and outlet openings are porportional to the volume of air flow, rather than being derived from mechanical linkages. It should also be noted that the presence of duct 47 brings the cool inlet air directly into the low pressure area of fan impeller 32. Inlet air does not contact column 22 until it has passed over heater element 39. This avoids the formation of relatively cold spots in the column which could degrade performance. The flow pattern in the column region is substantially the same whether the door 60 and opening 66 are open or closed. This ensures a uniform column temperature profile under all flow conditions.

As the internal temperature of the oven decreases, the fan may be slowed, with corresponding decreases in the air inlet and outlet openings. Alternatively, the fan may be maintained at full speed until the desired temperature is reached. The choice depends upon the program to be followed. In any event, when the desired set-point temperature is reached, the fan may be slowed to a speed wherein the counter-weight 64 closes the air inlet door 60 preventing further entrance of air and also allowing the rubber flap 70 to close over the air outlet opening 66.

It will be apparent that various modifications may be made to this apparatus. For example, the weight applied to the counter-weight 64 may be varied or it may be held closed and then released at some particular point by a magnetic latch. Also, the air inlet and outlet openings may be linked. If sub-ambient temperatures are desired, the air inlet may be linked into a refrigeration system.

## Claims

1. Apparatus for controlling the temperature within a chromatograph oven having heating means, an air circulating fan (32) and vents (46,66) in the oven wall positioned to permit air flow between ambient atmosphere and the oven interior and means (74,78) for regulating fan speed to achieve a desired temperature within the oven the apparatus being characterised in that the vents (46,66) constitute the sole means by which air can communicate between the ambient atmosphere and the oven interior; and in that the vents (46,66) comprise a first vent (46) in the oven wall positioned to admit ambient air into a region of relatively low pressure within the oven, means (60) for maintaining the first vent (46) closed but openable under the influence of pressure imbalance between the ambient air and the oven interior produced by changes in the fan speed, a second vent (66) in the oven wall positioned to discharge air from a region of relatively high pressure within the oven, and means (68) for maintaining the second vent (66) closed but openable under the influence of pressure imbalance between the ambient air and the oven interior produced by changes in the fan speed.

2. Apparatus according to claim to 1 wherein one of the vent closing means (60,68) comprises a hinged door having closure means tending to maintain the door in a closed position.

3. Apparatus according to claim 2 wherein the closure means is a counter-weight.

4. Apparatus according to any one of claims oven 1 to 3 wherein one of the vent closing means (60,68) is a resilient flap.

5. Apparatus according to any one of claims 2 to 4 in which the hinged door controls an inlet vent communicating with a duct (47) leading to the low pressure area of the fan impeller.

6. A method of controlling the temperature within a chromatograph oven having heating means and an air circulating fan having means for adjusting the speed of the fan (32) characterized by controlling the volumetric air flow between the oven interior and the ambient atmosphere solely by the operation of vents (46,66) responsive to pressure imbalances produced by the fan, directing the incoming ambient air to a position of relatively low pressure within the oven and discharging air, from a region of relatively high pressure within the oven, into the ambient atmosphere.

## Revendications

1. Appareil destiné à commander la température dans un four de chromatographe ayant des moyens de chauffage, un ventilateur de circulation d'air (32) et des orifices (46, 66) dans la paroi de four positionnés de façon à permettre l'écoulement de l'air entre l'atmosphère ambiante et l'intérieur du four et des moyens (74, 78) destinés à réguler la vitesse du ventilateur afin d'obtenir une température désirée dans le four, l'appareil étant caractérisé en ce que les orifices (46, 66) constituent l'unique moyen par lequel l'air peut communiquer entre l'atmosphère ambiante et l'intérieur du four; et en ce que les orifices (46, 66) comportent un premier orifice (46) dans la paroi de four positionné de façon à admettre de l'air ambiant dans une zone à relativement basse pression à l'intérieur du four, des moyens (60) destinés à maintenir le premier orifice (46) fermé mais pouvant être ouvert sous l'influence du déséquilibre de pression entre l'air ambiant et l'intérieur du four produit par des changements de la vitesse du ventilateur, un deuxième orifice (66) dans la paroi de four positionné de façon à évacuer de l'air d'une zone à relativement haute pression à l'intérieur du four, et des moyens (68) destinés à maintenir le deuxième orifice (66) fermé mais pouvant être ouvert sous l'influence du déséquilibre de pression entre l'air ambiant et l'intérieur du four produit par des changements de la vitesse du ventilateur.

2. Appareil selon la revendication 1, dans lequel un des moyens de fermeture d'orifice (60, 68) comporte une trappe articulée ayant des moyens de fermeture rendant à maintenir la trappe dans une position fermée.

3. Appareil selon la revendication 2, dans lequel les moyens de fermeture sont un contrepoids.

4. Appareil selon l'une quelconque des revendications 1 à 3, dans lequel un des moyens de fermeture d'orifice (60, 68) est un volet élastique.

5. Appareil selon l'une quelconque des revendications 2 à 4, dans lequel la trappe articulée commande un orifice d'entrée communiquant avec un conduit (47) menant à la zone à basse pression de la turbine de ventilateur.

6. Procédé de commande de la température dans un four de chromatographe ayant des moyens de chauffage et un ventilateur de circulation d'air ayant des moyens destinés à ajuster la vitesse du ventilateur (32), caractérisé par le fait de commander le débit volumétrique d'air entre l'intérieur du four et l'atmosphère ambiante uniquement par l'actionnement d'orifices (46, 66) sensibles aux déséquilibres de pression produits par le ventilateur, de diriger l'air ambiant entrant vers une position à relativement basse pression à l'intérieur du four et d'évacuer vers l'atmosphère ambiante l'air d'une zone à relativement haute pression à l'intérieur du four.

**Patentansprüche**

1. Vorrichtung zur Regelung der Temperatur innerhalb eines Chromatographenofens mit einer Heizvorrichtung, einem Luftumwälzgebläse (32) und in der Ofenwand angeordneten Lüftungsöffnungen (46, 66), um einen Luftstrom zwischen der Umgebungsatmosphäre und dem Ofeninneren zuzulassen, sowie Mittel (74, 78) zur Regulierung der Gebläsegeschwindigkeit zur Erzielung einer gewünschten Temperatur innerhalb des Ofens, dadurch gekennzeichnet, daß die Lüftungsöffnungen (46, 66) die einzigen Mittel darstellen, mit denen Luft zwischen der Umgebungsatmosphäre und dem Ofeninneren in Verbindung treten kann, und daß die Lüftungsöffnungen (46, 66) eine erste, in der Ofenwand angeordnete Lüftungsöffnung (46) aufweisen zum Einlassen von Umgebungsluft in einen Bereich von relativ geringem Druck innerhalb des Ofens, Mittel (60), um die erste Lüftungsöffnung geschlossen zu halten, die aber unter dem Einfluß eines Druckungleichgewichts zwischen der Umgebungsluft und dem Ofeninneren, welches durch Veränderungen der Gebläsegeschwindigkeit hergestellt wird, geöffnet werden kann, eine zweite, in der Ofenwand angeordnete Lüftungsöffnung (66) zur Luftabgabe aus einem Bereich von relativ hohem Druck innerhalb des Ofens, und Mittel (68), um die zweite Lüftungsöffnung (66) geschlossen zu halten, die aber unter dem Einfluß eines Druckungleichgewichts zwischen der Umgebungsluft und dem Ofeninneren, welches durch Veränderungen der Gebläsegeschwindigkeit hergestellt wird, geöffnet werden kann.

2. Vorrichtung nach Anspruch 1, wobei eine der Lüftungsöffnungs-Schließungsmittel (60, 68) eine Klapptür darstellt mit einem Schließmittel, das die Tür in einer geschlossenen Position hält.

3. Vorrichtung nach Anspruch 2, wobei das Schließmittel ein Gegengewicht ist.

4. Vorrichtung nach einem der Ansprüche 1 bis 3, wobei eines der Lüftungsöffnungs-Schließungsmittel (60, 68) eine Federklappe darstellt.

5. Vorrichtung nach einem der Ansprüche 2 bis 4, wobei die Klapptür eine Einlaß-Lüftungsöffnung steuert, die mit einer Röhre (47) in Verbindung steht, die zu dem Niedrigdruckbereich des Gebläserades führt.

6. Verfahren zur Regelung der Temperatur innerhalb eines Chromatographenofens mit einer Heizvorrichtung und einem Luftumwälzgebläse, das Mittel zum Einstellen der Geschwindigkeit des Gebläses (32) aufweist, dadurch gekennzeichnet, daß der volumetrische Luftstrom zwischen dem Ofeninneren und der Umgebungsatmosphäre allein durch den Betrieb der Lüftungsöffnungen (46, 66) geregelt wird, die auf die durch das Gebläse produzierten Druckungleichgewichte reagieren, die hereinkommende Umgebungsluft zu einem Bereich von relativ geringem Druck innerhalb des Ofens leiten und Luft von einem Bereich von relativ hohem Druck innerhalb des Ofens in die Umgebungsatmosphäre abführen.

EP 0 184 283 B1

**Fig. 1.**

**Fig. 6.**

OVEN TEMP.

SET TEMP.

DIFF. AMP.

SPEED CONTROL

M

6

Fig.2.

Fig.3.

Fig. 4.

Fig. 5.